# EUROPÄISCHE PATENTSCHRIFT

(11) **EP 1 017 524 B1**
(45) Veröffentlichungstag und Bekanntmachung des Hinweises auf die Patenterteilung: **12.03.2003**
(21) Anmeldenummer: 99945939.9
(22) Anmeldetag: 08.07.1999
(51) Int. Cl.: B23B 1/00

(54) **VERFAHREN ZUM BOHREN VON ZUMINDEST ZWEI BOHRUNGEN IM ZWEI-SCHRITT-TAKT**
METHOD FOR DRILLING AT LEAST TWO HOLES IN A TWO-STEP CYCLE
PROCEDE PERMETTANT DE PERFORER AU MOINS DEUX TROUS EN DEUX TEMPS

(30) Priorität: 15.07.1998 DE 19831625
(43) Veröffentlichungstag der Anmeldung: 12.07.2000
(73) Patentinhaber: ZF Lemförder Metallwaren AG, 49448 Lemförde (DE)
(72) Erfinder: SCHLEICHER, Andrej, D-49191 Belm (DE); BRANDT, Karl-Peter, D-49565 Bramsche (DE)
(86) Internationale Anmeldenummer: DE9902102
(87) Internationale Veröffentlichungsnummer: WO00003824

(56) Entgegenhaltungen:
- DE-C- 145 367
- US-A- 4 185 943
- PATENT ABSTRACTS OF JAPAN vol. 9, no. 158 (M-393), 3. Juli 1985 (1985-07-03) & JP 60 034204 A (NAKAMURATOME), 21. Februar 1985 (1985-02-21)

## Beschreibung

Die Erfindung betrifft ein Verfahren zum Bohren von zumindest zwei Bohrungen in einem Werkstück im Zwei-Schritt-Takt mittels zumindest einer doppelspindeligen Bearbeitungseinheit.

In der Praxis sind zwei Bearbeitungsvarianten des Bohrens von gleichzeitig zwei Bohrungen in einem Werkstück bekannt. Es sind dies:
Variante 1: Das Bohren unter Verwendung doppelspindeliger Bearbeitungszentren, oder
Variante 2: Das Bohren auf Zwei-Wege-Bohrmaschinen.

Bei der Variante 1 werden bei jedem Takt zwei Bohrungen gleichzeitig in einem Werkstück gebohrt. Dabei ist der Mittelabstand der zwei Bohrungen gleich dem Achsenabstand der Werkzeugspindeln. Der Achsenabstand der Werkzeugspindeln ist jedoch insbesondere bei Werkzeugmaschinen einfacherer Bauart nicht veränderbar. Dies bedeutet aber, daß unterschiedliche Werkstücke mit sich voneinander unterscheidenden Mittenabständen der Bohrungen auf verschiedenen Werkzeugmaschinen bearbeitet werden müßten, was hohe Investitionskosten für eine vergleichsweise geringfügige Änderung mit sich bringen würde. Eine Alternative könnte bestenfalls darin bestehen, für die Werkzeugspindeln jeweils neue Lagerungen einzusetzen, die bei einem kleineren Bohrungsabstand im Werkstück schwächer ausfallen würden. Der hierfür erforderliche Aufwand ist jedoch recht hoch und auch nicht wünschenswert, weil eine Schwächung der Werkzeugspindellagerung insgesamt nachteilig ist. Bei der Bearbeitung von Werkstücken mit doppelspindeligen Bearbeitungszentren ist somit die Flexibilität der Bearbeitungsmöglichkeiten sehr stark eingeschränkt.

Bei der Variante 2 werden durch das Bewegen einer Doppelspannvorrichtung im Zwei - Schritt - Takt zwei Werkstücke gleichzeitig durch zwei, zumeist in entgegengesetzten Richtungen wirkenden Bearbeitungseinheiten bearbeitet. Die Flexibilität diesen technologischen Ablaufes ist zwar verglichen mit der zuvor beschriebenen Variante 1 wesentlich höher, aber nach jedem Takt der Maschine sind hierbei zwei fertiggestellte Werkstücke vorhanden, die gleichzeitig entnommen beziehungsweise wieder beschickt werden müssen. Das bedingt einen erhöhten technischen Aufwand für die vorgelagerten und die nachgelagerten Einrichtungen und/oder Bearbeitungsstationen.

Der Erfindung liegt die technische Problemstellung zugrunde, den technologischen Ablauf der Einbringung von zumindest zwei Bohrungen in ein Werkstück so zu ändern, daß bei einer hohen Flexibilität und einer hohen Ausbringung der Maschine einfachere periphere Einrichtungen einsetzbar sind.

Eine Vorrichtung zur Durchführung des erfindungsgemaßen Verfahrens weist zunächst wenigstens eine doppelspindelige Bearbeitungseinheit, die gleichzeitig entlang einer ersten Verfahrachse bewegbar ist und eine Linearschlitteneinheit mit einer Doppelspannvorrichtung fiir zwei Werkstücke auf, die unabhängig von der Bearbeitungseinheit entlang einer zweiten Verfahrachse bewegbar ist. Erfindungsgemäß wird die technische Problemstellung dadurch gelöst, daß bei der Bearbeitung der Werkstücke in einem ersten Takt zunächst eine erste Bohrung in ein erstes Werkstück gesetzt wird, woran sich in einem zweiten Takt die Einbringung einer zweiten Bohrung in das erste Werkstück und gleichzeitig einer ersten Bohrung in ein zweites Werkstück anschließt.

Ist auch dieser zweite Takt abgeschlossen, wird das erste Werkstück aus der Doppelspannvorrichtung entnommen und diese mit einem weiteren Werkstück beschickt. Nunmehr erfolgt die Herstellung einer zweiten Bohrung in dem zweiten Werkstück und einer ersten Bohrung in dem zuletzt beschickten Werkstück. Somit werden die Werkstücke nacheinander bearbeitet, wobei beginnend mit dem zweiten Takt nach jedem Arbeitstakt ein fertig bearbeitetes Werkstück entnommen und die Doppelspannvorrichtung mit einem neuen Werkstück (Rohling) beschickt wird.

Ein derartiges Verfahren bietet die Vorteile einer höheren Flexibilität bei gleichzeitiger Vereinfachung des Aufbaus der peripheren Einrichtungen wie sie üblicherweise bei doppelspindeligen Bearbeitungszentren, entsprechend der zuvor beschriebenen Variante 1, des Standes der Technik, zur Anwendung kommen.

Ein erfindungsgemäßes Verfahren wird nachfolgend anhand der Zeichnung näher beschrieben.
Es zeigt:

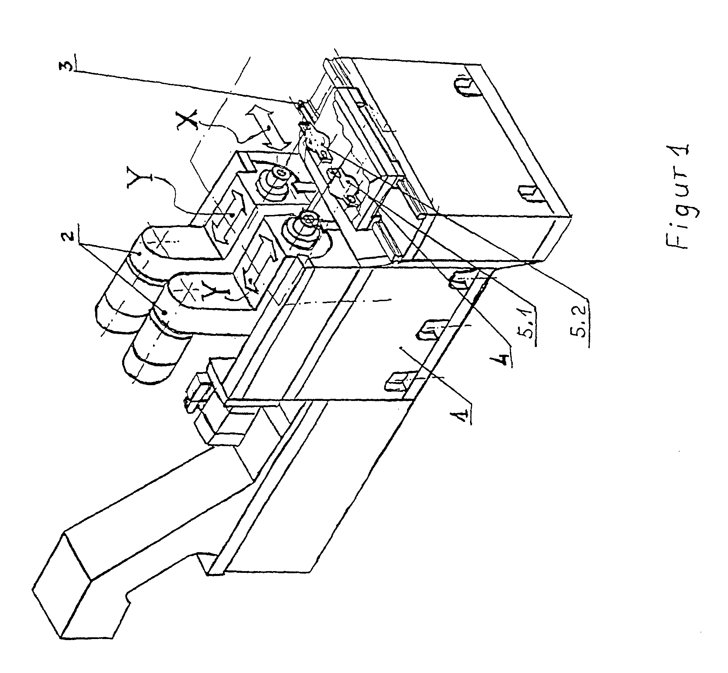

**Figur 1:** Eine Horizontal-Bohrmaschine mit einer Linearschlitteneinheit.

Das erfindungsgemäße Verfahren wird nachfolgend anhand einer speziellen Bearbeitung eines Kugelstückes auf einer Horizontal-Bohrmaschine beschrieben. Ein derartiges Kugelstück weist einen mittigen Kugelkörper mit zwei diametral gegenüberliegend angeordneten Zapfen auf, in die jeweils eine Bohrung einzubringen ist.
Die in der Figur 1 dargestellte Horizontal-Bohrmaschine besteht aus einem Unterbau 1 mit zwei doppelspindeligen Bearbeitungseinheiten 2, die gleichzeitig entlang einer Verfahrachse Y bewegbar sind und einer Linearschlitteneinheit 3 mit einer Doppelspannvorrichtung 4 für zwei Werkstücke, die entlang einer Verfahrachse X bewegbar ist. Bei der dargestellten Ausführung verlaufen die Verfahrachsen X und Y annähernd orthogonal zueinander.

Zu Beginn der Bearbeitung erfolgt zunächst die Beschickung der Doppelspannvorrichtung 4 mit einem ersten Werkstück (5.1). Nach dem Verfahren der Bearbeitungseinheiten 2 entlang der Verfahrachse Y auf das Werkstück zu, wird nunmehr die erste Bohrung (Nr.1) in das erste Werkstück (5.1) eingebracht.
Ist diese Bohrung (Nr.1) fertiggestellt, wird das erste Werkstück (5.1) mittels der Linearschlitteneinheit 3 um einen Betrag entlang der Verfahrachse X bewegt, der gleich dem Mittenabstand der Bohrungen eines Werkstückes ist.
Anschließend erfolgt die Beschickung der Doppelspannvorrichtung 4 mit dem zweiten Werkstück (5, 2). Durch die nachfolgende Vorschubbewegung der Bearbeitungseinheit 2 werden die zweite Bohrung im ersten Werkstück und die erste Bohrung im zweiten Werkstück gleichzeitig hergestellt.
Das erste Werkstück (5.1) kann nun entnommen und ein neues Werkstückrohteil (5.3) in die Doppelspannvorrichtung 4 eingesetzt werden. Nach dem Bewegen der Werkstücke zusammen mit der Doppelspannvorrichtung 4 in die Ausgangsposition erfolgt danach das Setzen der ersten Bohrung in dem dritten Werkstück zusammen mit der zweiten Bohrung in dem zweiten Werkstück.
Sind beide Bohrungen im zweiten Werkstück (5.2) fertiggestellt, wird auch dieses Werkstück aus der Doppelspannvorrichtung 4 entnommen und ein weiteres Werkstück beschickt.
Die Doppelspannvorrichtung 4 wird dementsprechend nach jedem Arbeitsgang um einen Betrag entlang der Verfahrachse X bewegt, der gleich dem Mittenabstand der Bohrungen der Werkstücke ist.

Das erfindungsgemäße Verfahren schafft einen kontinuierlichen Beschickungs- und Entnahmeprozeß von jeweils einem Werkstück, obwohl gleichzeitig zwei Werkstücke bearbeitet werden. Bei hoher Flexibilität und hoher Ausbringung der Maschine sind somit einfachere periphere Einrichtungen zur Beschickung und Entnahme der Werkstücke einsetzbar.

### Bezugszeichenliste:

- 1: Unterbau
- 2: Bearbeitungseinheit
- 3: Linearschlitteneinheit
- 4: Doppelspannvorrichtung
- 5.1: erstes Werkstück
- 5.2: zweites Werkstück
- X: Verfahrachse der Linearschlitteneinheit
- Y: Verfahrachse der Bearbeitungseinheit

## Patentansprüche

1. Verfahren zum Bohren von zumindest zwei Bohrungen mittels einer Vorrichtung, die zumindest eine doppelspindelige Bearbeitungseinheit (2), die entlang einer ersten Verfahrachse (Y) bewegbar ist und eine Linearschlitteneinheit (3) mit einer Doppelspannvorrichtung (4) für zwei Werkstücke (5.1, 5.2) aufweist, wobei die Linearschlitteneinheit unabhängig von der Bearbeitungseinheit entlang einer zweiten Verfahrachse (X) bewegbar ist,
**gekennzeichnet durch** folgende Schritte:
- Einbringung einer ersten Bohrung in ein erstes Werkstück (5.1) (erster Takt),
- anschließende Einbringung einer zweiten Bohrung in das erste Werkstück (5.1) und gleichzeitig einer ersten Bohrung in ein zweites Werkstück (5.2) (zweiter Takt),
- Entnahme des ersten Werkstückes (5.1),
- Beschickung mit einem dritten Werkstück (5.3),
- Einbringung einer zweiten Bohrung in das zweite Werkstück (5.2) und gleichzeitig einer ersten Bohrung in das dritte Werkstück (5.3).

2. Verfahren nach Anspruch 1
**dadurch gekennzeichnet, daß**
nach jedem dem zweiten Takt folgenden Takt ein fertigbearbeitetes Werkstück entnommen und die Doppelspannvorrichtung (4) mit einem weiteren Werkstück beschickt wird.

3. Verfahren nach einem der Ansprüche 1 oder 2,
**dadurch gekennzeichnet, daß**
der Abstand zwischen den Bohrungen im Werkstück durch den Betrag des Verfahrweges der Doppelspannvorrichtung (4) bestimmt ist.

## Claims

1. Method of drilling at least two bores by means of an apparatus, which comprises at least one double-spindle machining unit (2), which is movable along a first traversing axis (Y), and a linear slide unit (3) having a duplicate work holding device (4) for two workpieces (5.1, 5.2), wherein the linear slide unit is movable independently of the machining unit along a second traversing axis (X),
**characterized by** the following steps:
- introduction of a first bore into the first workpiece (5.1) (first cycle),
- subsequent introduction of a second bore into the first workpiece (5.1) and simultaneously of a first bore into a second workpiece (5.2) (second cycle),
- removal of the first workpiece (5.1),
- loading with a third workpiece (5.3),
- introduction of a second bore into the second workpiece (5.2) and simultaneously of a first bore into the third workpiece (5.3).

2. Method according to claim 1
**characterized in that**
after each cycle following the second cycle a completely machined workpiece is removed and the duplicate work holding device (4) is loaded with a further workpiece.

3. Method according to one of claims 1 or 2,
**characterized in that**
the distance between the bores in the workpiece is determined by the amount of distance traversed by the duplicate work holding device (4).

## Revendications

1. Procédé pour percer au moins deux perçages à l'aide d'un dispositif, qui comporte au moins une unité d'usinage (2) à deux broches, qui est déplaçable le long d'un premier axe de translation (Y), et une unité formant chariot linéaire (3) comportant un dispositif de serrage double (4) pour deux pièces à usiner (5.1, 5.2), l'unité à chariot - linéaire étant déplacable indépendamment de l'unité d'usinage le long d'un second axe de translation (X),
**caractérisé par** les étapes suivantes :
- aménagement d'un premier perçage dans une première pièce à usiner (5.1) (première étape),
- aménagement ensuite d'un second perçage dans la première pièce à usiner (5.1) et simultanément d'un premier perçage dans une seconde pièce à usiner (5.2) (seconde étape),
- retrait de la première pièce à usiner (5.1),
- chargement d'une troisième pièce à usiner (5.3),
- aménagement d'un second perçage dans la seconde pièce à usiner (5.2) et simultanément d'un premier perçage dans la troisième pièce à usiner (5.3).

2. Procédé selon la revendication 1, **caractérisé en ce qu'**après chaque étape qui succède à la seconde étape, une pièce à usiner, dont l'usinage est terminé, est retirée et le dispositif de serrage double (4) est chargé par une autre pièce à usiner.

3. Procédé selon l'une des revendications 1 ou 2,
**caractérisé en ce que**
la distance entre les perçages dans la pièce à usiner est déterminée par la distance du trajet de translation du dispositif de serrage double (4).
